# EUROPEAN PATENT SPECIFICATION

(11) **EP 0 738 412 B1**
(45) Date of publication and mention of the grant of the patent: **30.09.1998**
(21) Application number: 95900312.0
(22) Date of filing: 04.11.1994
(51) Int. Cl.: G09F 9/313

(54) **PLASMA DISPLAY PANEL FOR MULTI-SCREEN SYSTEM**
PLASMAANZEIGETAFEL FÜR MULTISCHIRMSYSTEM
PANNEAU AFFICHEUR A PLASMA POUR SYSTEME A ECRANS MULTIPLES

(43) Date of publication of application: 23.10.1996
(73) Proprietor: ORION ELECTRIC CO., LTD., Kumi-shi, Kyungsangbuk-do 730-030 (KR); SPC Plasma Co., Ryazan, 390023 (RU)
(72) Inventor: LEE, Chun, Woo, Gumi-shi Kyungsangbuk-do 730-100 (KR); KWON, Hyuk, Chae, Daegu 706-021 (KR); SAMORODOV, Vladislav Georguevich, Ryazan, 390023 (RU); POKRYVAILO, Anatoli Borisovich, Ryazan, 390006 (RU); NIKOLAEBICH, Zhuralev Stanislab, Ryazan, 390006 (RU); MIHAILOVICH, Sokolov Vladimir, Ryazan, 390037 (RU); GRUGOREBNA, Starynina Tachyana, Ryazan, 390048 (RU)
(74) Representative: Schmidt, Horst, Dr.
(86) International application number: PCT/KR94/00155
(87) International publication number: WO 96/14631

(56) References cited:
- FR-A- 2 696 867
- US-A- 4 562 434
- US-A- 5 099 173
- SOVIET INVENTIONS ILLUSTRATED, Section EL, week 8826, Derwent Publications Ltd. , London S25; & SU,A,1 074 301 (BALAKIN).

## Description

### TECHNICAL FIELD

The present invention relates to a plasma display panel and more particularly, to a plasma display panel for a multi-screen system pursuant to the preamble of claim 1.

### BACKGROUND ART

A plasma display panel of the above-mentioned type is known from FR-A-2696867. Another plasma display panel is known from SU-B-1074301. The prior plasma display panels comprise upper and lower plates and systems of mutually orthogonal electrodes, in which the display cells adjacent to a sealing seam are formed by hollows or grooves, and an external sealing element is separated from the internal cell volume by a light-translucent element with a round cross-section inserted into the hollows and located around the edges. The drawback of the prior plasma display panels is in a loss of a pitch at the place of joint of panels because of a large thickness of the sealing seam which results in an distortion of the information displayed on the screen.

### DISCLOSURE OF THE INVENTION

Accordingly, in consideration of the drawbacks of the prior art, the main object of the present invention is to provide a plasma display panel having an improved information quality by eliminating an information distortion at the place of the panel sealing parts.

To accomplish this object, the plasma display panel for a multi-screen system according to the present invention comprising upper and lower dielectric plates; cathode and anode electrodes orthogonally located between said plates; display cells defined by said electrodes;barrier ribs for separating and defining display cells from each other; and a sealing seam for sealing the edge parts of said two plates, is characterized in that the length in a direction perpendicular to the sealing seam of the display cells (6) adjacent the sealing seam is greater than that of the rest of the display cells (5).

### BRIEF DESCRIPTION OF DRAWINGS

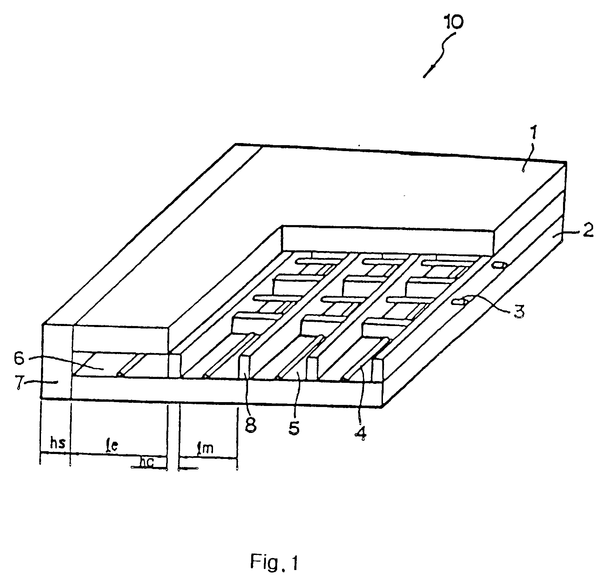

Fig. 1 is schematic view depicting the plasma display panel for a multi-screen system.

### DETAILED DESCRIPTION OF THE INVENTION

In Fig. 1 a plasma display panel (10) comprises an upper dielectric plate (1) and a lower dielectric plate (2). Cathode electrode (3) and anode electrode (4) are orthogonally located between said plates (1) and (2). The electrodes (3) and (4) form display cells (5) and (6), the cells (5) being formed between barrier ribs (8) and the cell (6) being adjacent to one side of a sealing seam (7). The display cells (5) and (6) are separated by barrier ribs (8).

As depicted, the horizontal length of display cell (6) adjacent to the sealing seam (7) is longer than the horizontal length of the display cell (5) being formed between the barrier ribs (8) in that the following ratio should be observed:$\text{0.5 (hs - hc) + lm ≤ le ≤ (hs - hc) + lm}$
- le :: length of the cell (6) adjacent to the sealing seam (7);
- lm :: length of the cell (5)
- hs :: width of the sealing seam (7);
- hc :: width of the barrier ribs (8) between the cells (5).

For example, if the horizontal length of cell (5) is 2.2 mm, the width of sealing seam (7) is 1.5 mm, and the width of barrier ribs (8) between cells (5) is 0.75 mm, the horizontal lenght of cell (6) adjacent to the sealing seam (7) becomes 2.7 mm.

Increasing the horizontal lenth of cell (6) adjacent to the sealing seam (7) within the limits of given ratio results in keeping of specific light flux constant in the centre of panels and the place of their joints and it assists to create more favourable conditions for an operator to read the screen information.

When making the lenght of cell (6) adjacent to the sealing seam (7) le ≥ (hs - hc) + lm, an intensified light occurs in the region of the sealing seam being provoked by light flux increase of more than 30 % and resulting in information perception with distortion.

When making the length of cell (6) adjacent to the sealing seam (7) le ≤ (hs - hc) + lm, a loss of information takes place as a result of light flux reductions coming from cell adjacent to the sealing by more than 30 %.

±30% is a permissable limit of screen non-uniform light for DC-type plasma display panels required for normal perception of information on the screen.

As above mentioned, the invention allows to eliminate video-information distortion in a multi-screen system in places of panel joints and it results in quality improvement of the information displayed.

## Claims

1. A plasma display panel for a multi-screen system comprising:
upper (1) and lower (2) dielectric plates:
cathode (3) and anode (4) electrodes orthogonally located between said plates;
display cells (5,6) defined by said electrodes;
barrier ribs (8) for separating and defining display cells from each other; and
a sealing seam (7) for sealing the edge parts of said two plates,
characterized in that the length in a direction perpendicular to the sealing seam (7) of the display cell (6) adjacent the sealing seam is greater than that of the rest of the display cells (5).

2. A plasma display panel according to claim 1 wherein a ratio of the length perpendicular to the sealing seam (7) of the display cell (6) adjacent to the sealing seam to that of the rest of the display cells (5) is expressed by the following equation:$\text{0.5 (hs - hc) + lm ≤ le ≤ (hs - hc) + lm}$
le : length of display cell adjacent to the sealing seam;
lm : length of the rest of the display cells;
hs : width of the sealing seam;
hc : width of the barrier ribs (8) between the display cells.

## Patentansprüche

1. Plasmaanzeigefeld für ein Mehrfachbildschirmsystem, umfassend:
obere (1) und untere (2) dielektrische Platten;
Kathoden- (3) und Anoden- (4) elektroden, die senkrecht zwischen den Platten angeordnet sind;
Anzeigezellen (5,6), die durch die Elektroden gebildet sind;
Begrenzungsrippen (8), die die Anzeigezellen voneinander trennen und gegeneinander abgrenzen; und
einen Abdichtungssaum (7) zum Abdichten der Kantenteile der beiden Platten,
dadurch gekennzeichnet, dass die Länge der Anzeigezelle (6) in einer Richtung senkrecht zum Abdichtungssaum (7) nahe dem Abdichtungssaum grösser als die restliche Länge der Anzeigezellen (5) ist.

2. Plasmaanzeigefeld nach Anspruch 1, dadurch gekennzeichnet, dass das Verhältnis der Länge der Anzeigezelle (6) senkrecht zum Abdichtungssaum (7) nahe dem Abdichtungssaum zu der restlichen Länge der Anzeigezellen (5) durch die folgende Gleichung wiedergegeben ist:$\text{0,5 (hs - hc) + lm ≤ le ≤ (hs - hc) + lm}$
le: Länge der Anzeigezelle nahe dem Abdichtungssaum;
lm: Länge des Restes der Anzeigezellen:
hs: Breite des Abdichtungssaumes;
hc: Breite der Begrenzungsrippen (8) zwischen den Anzeigezellen.

## Revendications

1. Panneau d'affichage à plasma pour un système à plusieurs écrans comprenant :
des plaques diélectriques supérieure (1) et inférieure (2);
des électrodes de cathode (3) et d'anode (4) disposées perpendiculairement entre lesdites plaques;
des cellules d'affichage (5, 6) définies par lesdites électrodes;
des nervures de barrière (8) pour séparer et définir les cellules d'affichage les unes par rapport aux autres; et
un joint de scellement (7) pour sceller les parties de bord desdites deux plaques,
caractérisé en ce que la longueur dans une direction perpendiculairement au joint de scellement (7) de la cellule d'affichage (6) adjacente au joint de scellement est plus grande que celle des autres cellules d'affichage (5).

2. Panneau d'affichage à plasma selon la revendication 1 dans lequel un rapport entre la longueur perpendiculairement au joint de scellement (7) de la cellule d'affichage (6) adjacente au joint de scellement et celle des autres cellules d'affichage (5) est exprimé par l'équation suivante :$\text{0,5 (hs - hc) + lm ≤ le ≤ (hs - hc) + lm}$
le : longueur d'une cellule d'affichage adjacente au joint de scellement;
lm : longueur des autres cellules d'affichage;
hs : largeur du joint de scellement;
hc : largeur des nervures de barrière (8) entre les cellules d'affichage.
